# EUROPEAN PATENT SPECIFICATION

(11) **EP 4 222 012 B1**
(45) Date of publication and mention of the grant of the patent: **14.10.2026**
(21) Application number: 20785958.8
(22) Date of filing: 01.10.2020
(51) Int. Cl.: B60L 3/12, B60L 13/06, B60L 5/34

(54) **TROLLEY-ASSISTED WORK MACHINE, ARRANGEMENT AND METHOD**
WAGENUNTERSTÜTZTE ARBEITSMASCHINE, ANORDNUNG UND VERFAHREN
MACHINE DE TRAVAIL ASSISTÉE PAR CHARIOT, AGENCEMENT ET PROCÉDÉ ASSOCIÉS

(43) Date of publication of application: 09.08.2023
(73) Proprietor: Sandvik Mining and Construction Oy, 33330 Tampere (FI)
(72) Inventor: JUNTUNEN, Raimo, 33330 Tampere (FI)
(74) Representative: Sandvik
(86) International application number: PCT/EP2020/077505
(87) International publication number: WO 2022/069046

(56) References cited:
- EP-A1- 1 976 722
- EP-B1- 1 976 722
- US-A- 4 075 675
- US-A1- 2013 282 211
- US-B1- 9 991 694

## Description

### FIELD

The present invention relates to trolley-assisted work machines. In a particular embodiment, the present invention relates to trolley-assisted mining vehicles. In a further particular embodiment, the present invention relates to trolley-assisted underground mining vehicles.

### BACKGROUND

Common trolley-fed solutions comprise trains, trams and trolley buses, which do not normally detach from trolley during operation. As a particular example of underground mining, some truck and rail applications have been used there. As a common feature, these trolley-fed vehicles do not have the ability to detach from the trolley.

In trolley-assisted applications, the machine has a power source on board, allowing it to operate when not connected to a trolley system. For instance, a mine may have a trolley line installed into its main ramp, while operation inside the mining operations area is performed utilizing the on-board power source. When hauling up, trolley-assisted machine can connect to the trolley in the main ramp and draw power from the trolley.

A trolley-assisted machine needs to decouple from the trolley during operation, for example when it approaches the end of the trolley line. A problem then is how to signal the machine when the end of the line is near. Visual signs can be used but there lies space for human error in case the machine operator doesn't see the signs and does not lower the trolley in time. Additionally, the use of any safety margins means that not all of the trolley line can be used. Moreover, any automated systems would typically require more complex control algorithms to ensure safe operation during occasions of trolley disconnection. US 2013/282211 A1 discloses a power-feeding arrangement for a trolley-assisted work machine, comprising a trolley line for providing electric power to the work machine, comprising means for controlling the transmission of an electric signal along the trolley line for signalling that the work machine is near an end of the trolley line so that the work machine can be detached from the trolley line before the end of the trolley line.

### OBJECTIVE

An objective is to alleviate the disadvantages mentioned above.

In particular, it is an objective to provide an improved way to signal to a trolley-assisted work machine, when connected to a trolley line during operation, that an end of the trolley-line is near.

Additionally, it is an objective to provide this in a manner that it can be applied for an automated operation of an automated work machine.

Additionally, it is an objective to provide the aforementioned way of signaling in a manner that is particularly applicable for mining equipment and, finally, for underground mining equipment.

### SUMMARY

The disclosure proposes utilizing a trolley line to signal a work machine that it is near or nearing the end of the trolley line. An electric signal can be modulated into the trolley line.

In accordance with the present disclosure, a "trolley-assisted work machine" may be a work machine, which can be powered by a trolley-line when the work machine is coupled to the trolley line and by power source of the work machine, when the work machine is decoupled from the trolley line. Correspondingly, the work machine is configured for coupling to and decoupling from the trolley line during operation of the work machine. The coupling may refer to attachment of the work machine to the trolley line for transferring power from the trolley line to the work machine. Correspondingly, decoupling may refer to detachment of the work machine from the trolley line. In this disclosure, any references to the position of the work machine may be understood as the position of the coupling point between the work machine and the trolley line. It should be understood that the trolley-assisted work machine may be configured for being powered by the power source even when the work machine is coupled to the trolley line, fully or partially. Additionally or alternatively, the trolley-assisted work machine may be configured for an energy storage, such as a battery, of the power source being charged from the trolley line when the work machine is coupled to the trolley line. The invention is defined in the appended claims.

According to a first aspect, a power-feeding arrangement for a trolley-assisted work machine is disclosed. The arrangement comprises a trolley line for providing electric power to the work machine. The arrangement further comprises means for controlling transmission of an electric signal along the trolley line for signaling that the work machine is near an end of the trolley line so that the work machine can be decoupled from the trolley line before the end of the trolley line. In this manner, the trolley line providing power to the work machine can be simultaneously used for providing control information to the work machine in the form of the electric signal. As the electric signal is transmitted along the same power line that can be used for powering the work machine, the arrangement may be implemented also as a power-line communication arrangement. Importantly however, the trolley line providing the power line may have a direct current power line for providing the electric power to the work machine.

In an embodiment, the means comprise a transmitter configured to cause the electric signal to be provided to the trolley line. This allows the power-feeding arrangement itself to constantly or repeatedly cause the electric signal to be transmitted to the trolley line so that a trolley-assisted work machine coupled to the trolley line may receive the signal for determining whether they are near to an end of the trolley line.

According to the invention, the means comprise one or more trap filters coupled to the trolley line for limiting the transmission of the electric signal along the trolley line. This allows the transmission of the electric signal along the trolley line to be controlled in various ways as the trap filters may be tuned to the electric signal. For example, one or more trap filters may be positioned along the trolley line to define a near-end region of the trolley line for commencing decoupling. Presence of the electric signal, which may be provided by the transmitter of the power-feeding arrangement, in this near-end region may then be used to indicate that a work machine coupled to the trolley line at the near-end region is near the end of the trolley line. For this, a single trap filter may be positioned at a distance from the end of the trolley line, in which case the near-end region can be formed from the trap filter towards the end of the trolley line, for example as the part of the trolley line between the trap filter and the end of the trolley line. Due to creation of the near-end region utilizing the trap filter, the electric signal may be used to provide an indication that the end of the trolley line is near as the work machine enters the near-end region, for example by passing the trap filter. It is to be understood that, in practice, any trap filter as indicated herein may leak some signal and therefore expressions related to the location of trap filter may refer to the exact physical location of the trap filter and/or to an effective location of the trap filter as determined by the location where the trap filter effectively reduces the electric signal below a threshold so that it can no longer be used for signaling that the work machine is near an end of the trolley line. Correspondingly, passing a trap filter may be considered as passing the physical and/or effective location of the trap filter.

According to the invention, the one or more trap filters comprise a trap filter at an end of the trolley line. This allows the trolley line to be efficiently used with a trolley-assisted work machine having itself a transmitter for causing the electric signal to be provided to the trolley line. The electric signal received from the trolley line by such a work machine has then an amplitude and/or frequency that is dependent on how close the work machine is to the trap filter at the end of the trolley line. Correspondingly, the amplitude and/or the frequency of the electric signal may then be used to indicate distance to the trap filter. For example, the amplitude may be measured to actually determine the distance from the work machine to the trap filter or a threshold value may be used to indicate that the work machine is near the trap filter and thereby also near the end of the trolley line. It is to be understood that "at an end of the trolley line" as discussed herein may refer to the final end point of the trolley line, beyond which the power line of the trolley line does not extend, or any part of the trolley line in the vicinity of this final end point at an end of the trolley line. The trap filter may thus be also some distance away from the final end point, although by locating the trap filter at or immediate to the end point may simplify the recoupling of the work machine to the trolley line since the situation where the recoupling takes place between the trap filter and the final end point may then be avoided. What is important in this embodiment is that, due to the positioning of the trap filter, the electric signal may be used to provide an indication that the end of the trolley line is near or nearing as the work machine approaches the trap filter, even if it has not yet passed the trap filter. This may be indicated, for example, by a spatially changing amplitude of the electric signal and/or spatially changing resonance frequency of the trolley line. In a further embodiment, the one or more trap filters may comprise or consist of two trap filters at the opposite ends of the trolley line. This allows a straightforward way to signal that the end of the trolley line is near at either end.

According to a second aspect, a trolley-assisted work machine comprising an electric power connection for receiving electric power from a trolley line is disclosed. What is disclosed above with respect to the arrangement applies also here, where the same or corresponding expressions are used, and vice versa. The work machine comprises a receiver coupled to the electric power connection for receiving an electric signal from the trolley line for signaling that the work machine is near an end of the trolley line. The work machine also comprises a controller coupled to the receiver for controlling the decoupling of the work machine from the trolley line before the end of the trolley line. The controller may perform this utilizing one or more electric signals received from the trolley line.

In an embodiment, the work machine comprises a transmitter for causing the electric signal to be provided to the trolley line. This allows the work machine itself to constantly or repeatedly cause the electric signal to be transmitted to the trolley line so that it may receive the electric signal, transmitted along the trolley line, for determining whether they are near to an end of the trolley line.

According to the invention, the controller is configured to control the decoupling of the work machine from the trolley line based on the amplitude and/or frequency of the electric signal, wherein the latter may correspond to the resonance frequency of the trolley line. The amplitude of the electric signal and/or the resonance frequency of the trolley line may be spatially changing. The amplitude of the electric signal may change along the trolley line due to losses. On the other hand, because the trolley line, i.e. the wires of the power line of the trolley line, always have a non-zero inductance, the resonance frequency of the trolley line, for which the amplitude may be maximized, may also change when the position of the work machine changes along the trolley line. When the inductance of the trolley line is low, this effect may be negligible, but if it is large, it may affect the resonance frequency. One or more threshold values for amplitude and/or frequency may also be used to indicate that the work machine is near the end of the trolley line. For example, the controller may be configured to cause the work machine to be decoupled from the trolley line in response to the amplitude passing a threshold value. Any passing of a threshold value may correspond to ascending above or descending below the threshold value.

In accordance with the present disclosure, different indicators may be used for determining that the work machine is near a first end of the trolley line and a second end of the trolley line. For example, a first indicator may be used to determine that the amplitude of the electric signal has ascended above a first threshold value and/or that the resonance frequency moves toward a nominal resonance frequency of the trolley line, which may correspond to the resonance frequency of one or more trap filters. This first indicator may be used for determining that a first end of the trolley line is near. A second indicator may be used to determine that the amplitude of the electric signal has descended below a second threshold value and/or that the resonance frequency moves away the nominal resonance frequency of the trolley line. This second indicator may be used for determining that a second end of the trolley line is near. The first threshold value may be the same or substantially the same as the second threshold value.

In an embodiment, the work machine comprises a trap filter to which the receiver is coupled for receiving the electric signal. This provides a simple and efficient way to capture the electric signal for the receiver as the trap filter can be tuned to the electric signal.

In an embodiment, the work machine comprises a transformer for galvanically isolating the receiver from the electric power connection. This allows the receiver to be isolated from the voltage levels of the trolley line, even when the work machine is coupled to the trolley line for receiving electric power from the trolley line.

According to a third aspect, a system comprising the power-feeding arrangement according to the first aspect or any of its embodiments and the trolley-assisted work machine according to the second aspect or any of its embodiments.

It is noted that in the system, both the work machine and the arrangement may comprise their own transmitter. In this case, the transmitters may have different transmitting frequencies. For example, the system may comprise a first transmitter having a first transmitting frequency and one or more trap filters having a resonance frequency corresponding to the first transmitting frequency. The system may also comprise a second transmitter having a second transmitting frequency, different from the first transmitting frequency, and one or more trap filters having a resonance frequency corresponding to the second transmitter frequency. The first transmitter, and the corresponding trap filters, may then be used for indicating that a work machine is near a first end of the trolley line and the second transmitter, and the corresponding transmitters, may then be used for indicating that the work machine is near a second end of the trolley. In an embodiment, only the work machine or only the arrangement comprises the transmitter.

What is disclosed herein with respect to any of the aspects or embodiments, where the same or corresponding expressions are used, applies to any other aspect or embodiment.

In an embodiment, the trolley line comprises or consists of a direct current power line. This allows not only the number of wires for the trolley line to be reduced. In addition, it allows reducing interference from ac/dc conversion for the electric signal indicating that the end of the trolley line is near. This may provide particular effects for trolley lines to which multiple work machines are coupled.

In an embodiment, the trolley-assisted work machine is a mining vehicle or an underground mining vehicle. This may find specific uses with the previous embodiment.

In some embodiments, the frequency and/or the amplitude of the electric signal may be temporally constant, i.e. constant in time when observed at a stationary point along the trolley line. However, in a specific embodiment, the electric signal has a temporally changing frequency, which may correspond to a frequency sweep, and/or a temporally changing amplitude. The temporally changing frequency may extend on both sides of the nominal resonance frequency of the trolley line, which may correspond to the resonance frequency of one or more trap filters. The temporally changing frequency may have a width of at least the resonance frequency of the trolley line, for example extending, at least from a frequency corresponding to half the resonance frequency to a frequency corresponding to twice the resonance frequency. The temporally changing amplitude may be used, for example, for determining the distance from the work machine to an end of the trolley line. The temporally changing frequency and/or amplitude may be provided by causing the electrical signal to be transmitted to the trolley line with temporally changing frequency and/or amplitude. This may be done from the transmitter of the work machine and/or that of the arrangement.

In an embodiment, the arrangement and/or the work machine comprises a transmitter, as described above, and a transformer for galvanically isolating the transmitter from the trolley line, even when the work machine is coupled to the trolley line for receiving electric power from the trolley line. When both the work machine and the arrangement comprise their own transmitter, both may also comprise their own corresponding transformer.

In accordance with this disclosure, it is noted that multiple trap filters may be used even for one end of the trolley line. Such multiple trap filters may have different resonance frequencies. This may be used, for example, for compensating the spatially changing resonance frequency of the trolley line. The multiple trap filters may be located substantially at the same position along the trolley line or they may be spaced, for example at substantially equal distances such as at 50m, 100m, 150m from an end of the trolley line.

According to a fourth aspect, a method for signaling an end of a trolley line for a trolley-assisted work machine is disclosed. The method comprises causing an electric signal to be transmitted along the trolley line for signaling the end of the trolley line so that the electric signal can be received by the work machine when coupled to the trolley line for receiving electric power from the trolley line. The electric signal may be caused to be transmitted by the work machine or by a transmitter directly coupled to the trolley line, for example as a part of a power-feeding arrangement comprising the trolley line. One or more trap filters may be used to limit the transmission of the electric signal along the trolley line, for example to create an end region as described above or to signal to a work machine approaching the trap filter that the end of the trolley line is near. The method may comprise causing the work machine to be decoupled from the trolley line before the end of the trolley line, which may be performed utilizing the information from the electric signal that the end of the trolley line is near.

According to a fifth aspect, a computer program product comprises instructions which, when the computer program product is executed by a computer, cause the computer to carry out the method of the fourth aspect and/or any of its embodiments alone or in combination. The controller as described herein may comprise or consist of the computer.

As disclosed herein, a signal may be provided to a trolley-assisted work machine than an end of a trolley line is near so that the work machine may decouple from the trolley line before the end. The work machine may be automated so that, after receiving the signal, it may automatically determine that the end of the trolley line is near. It may subsequently automatically decouple from the trolley line.

The decoupling of the work machine from the trolley line may comprise causing the trolley current collector current to be controlled to zero before separating the work machine from the trolley line. The decoupling may also comprise lowering of the trolley current collector, which can be done while the work machine is still below the trolley line. Because the disclosure allows an advance warning to be provided to the work machine when the end of the trolley line is near, various appropriate procedures may be performed before the work machine decouples from the trolley line. Any of the aspects may be arranged for multiple operations, for example one where the current collector current is controlled to zero and other where the work machine is separated from the trolley line. Different operations may even be based on different signals, for example at different distances from the end of the trolley line. The disclosure also allows tracking the location of the work machine with respect to the trolley line, even substantially in real time.

Furthermore, the disclosure allows indicating that the end of the trolley line is near without additional communication infrastructure such as wireless network communications or the like. With the present disclosure, the electric signal can be sent for a predetermined length of the trolley line, as determined by the positioning of one or more trap filters. In this case, no location tracking for the work machine is necessarily required. On the other hand, the electric signal may also be sent from the work machine, which may be used to allow location tracking for the work machine in a simple and efficient manner, where no further equipment is required. A trap filter may be used as an end-of-line indicator or to prevent the signal from being received too early, trapping it into a specific range of the trolley line. More than one trap filters may also be used for this purpose, for example with the trap filters having different resonance frequencies.

An effect of the disclosed solution is that the electric signal, indicating that the end of the trolley line is near, can be transmitted accurately on specific length of the trolley line. Additionally, the system can be made fairly simple and robust. The proposed solution allows use of automated systems and operator assistance with e.g. automated trolley lowering after receiving the electric signal.

It is to be understood that the aspects and embodiments described above may be used in any combination with each other. Several of the aspects and embodiments may be combined together to form a further embodiment of the invention.

### BRIEF DESCRIPTION OF THE DRAWINGS

The accompanying drawings, which are included to provide a further understanding and constitute a part of this specification, illustrate examples and together with the description help to explain the principles of the disclosure. In the drawings:
**Fig. 1** schematically illustrates a system comprising a work machine and an arrangement according to an example,
**Fig. 2** schematically illustrates an example of the previous system,
**Fig. 3** schematically illustrates a system comprising a work machine and an arrangement according to another example,
**Fig. 4** schematically illustrates an example of the previous system,
**Fig. 5** schematically illustrates a yet another example of a system comprising a work machine and an arrangement, and
**Fig. 6** schematically illustrates one more example of a system comprising a work machine and an arrangement.

Like references are used to designate equivalent or at least functionally equivalent parts in the accompanying drawings.

### DETAILED DESCRIPTION

The detailed description provided below in connection with the appended drawings is intended as a description of examples and is not intended to represent the only forms in which the example may be constructed or utilized.

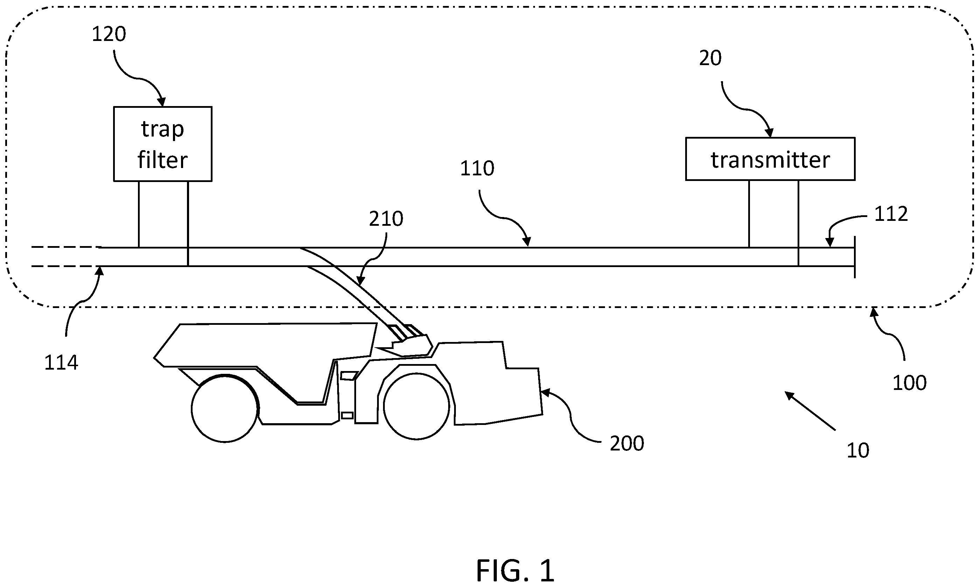

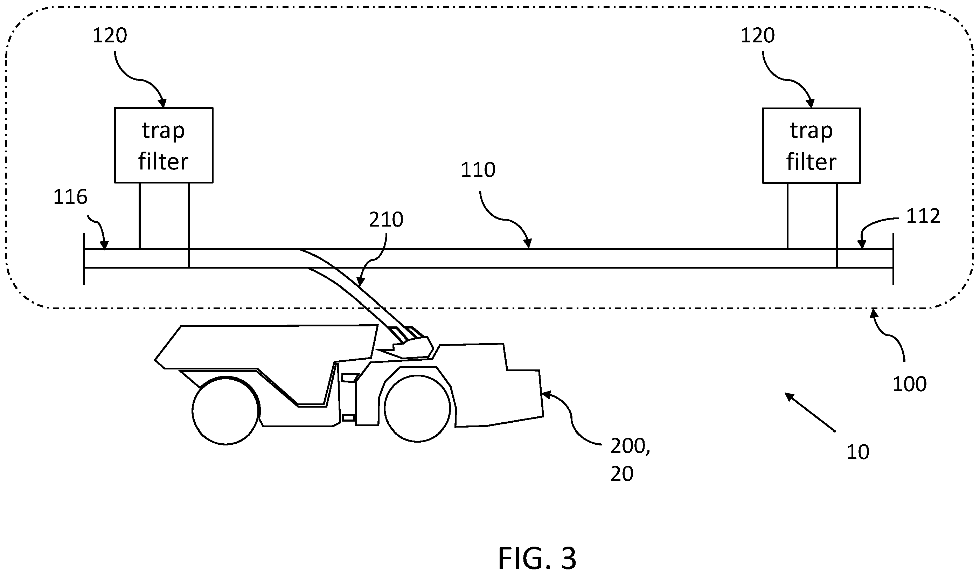

Figures 1 and 3 show two examples of a system 10 comprising a work machine 200 and an arrangement 100. Any functionality disclosed herein can also be applied as a method.

A work machine 200 is a trolley-assisted work machine, i.e. it can be powered both by a trolley line 110, when coupled to one, and by its own power source, even when decoupled from the trolley line 110. The work machine 200 may be a mining vehicle or an underground mining vehicle. Additionally or alternatively, it may be a truck. The work machine comprises an electric power connection for receiving electric power from a trolley line. The electric power connection may comprise or consist of a current collector 210 for coupling to the trolley line 110 for receiving electric power therefrom. As its own power source, it may comprise or consist of an energy storage such as a battery and/or a capacitor. The energy storage may be coupled to the electric power connection and thereby be chargeable from the trolley line when the work machine is coupled to the trolley line.

A trolley line 110 is configured for providing electric power to a trolley-assisted work machine so that the work machine 200 may couple to and decouple from it during operation. It may be an underground trolley line, in which case it is configured for installation partially or fully underground. The trolley line comprises or consists of a power line, which may be a direct current (dc) power line or an alternative current (ac) power line. Correspondingly, the trolley line may comprise two or more wires for electric power transmission, for example two wires for a unipolar power line or three wires for a bipolar power line or an ac power line. The invention may be utilized with trolley lines of various voltages. In some examples, the trolley line comprises a low-voltage power line, for example having a voltage at or below 1000 V (dc) or 1500 V (bipolar or ac) for providing electric power to the work machine. In some examples, the trolley line comprises a medium-voltage power line for providing electric power to the work machine. In many useful examples the trolley line comprises a power line having a voltage of 5 kV or less.

The arrangement 100 is a power-feeding arrangement for the trolley-assisted machine 200. However, the arrangement can also be utilized for as a signaling arrangement utilizing the power line of the trolley line 110 for signaling to the work machine 200 coupled to the trolley line that it is near an end 112, 116 of the trolley line.

In accordance with the present disclosure, an electric signal can be transmitted along the trolley line 110 for signaling that the work machine 200 is near an end 112, 116 of the trolley line. When received at the work machine, the electric signal can be used for controlling decoupling of the work machine from the trolley line before the end of the trolley line.

The electric signal is a communication signal that can be transmitted along a power line. It may be a constant-frequency or a variable-frequency signal. As an example, the electric signal may comprise a frequency sweep. The electric signal may be a constant signal or it may comprise one or more pulses. A pulsed signal may be provided to the trolley line 110 with regular intervals, for example. The electric signal may be a high frequency signal, for example 20 kHz. The electric signal may have any applicable shape. For example, it may comprise or consist of a sine wave, a triangular wave or a square wave. It may also have a mixture of shapes, for example comprising any combination of the shapes mentioned above. The electric signal may be shaped by modulation, which may comprise any combination of amplitude, frequency and phase modulation.

The work machine 200 comprises a receiver coupled to the electric power connection of the work machine for receiving the electric signal from the trolley line 110. The receiver may comprise or consists of a trap filter. The receiver may be configured to capture a constant frequency or a frequency interval. After receipt, the electric signal may be used by the work machine for determining that the work machine is near an end 112, 116 of the trolley line. For this purpose, the work machine comprises a controller coupled to the receiver for controlling the detachment of the work machine from the trolley line before the end of the trolley line. The controller may be the vehicle controller of the work machine. The controller may comprise one or more processors. It may also comprise one or more memories and computer program code for performing any of the applicable operations disclosed herein. The work machine may also comprise a transformer for galvanically isolating the receiver from the electric power connection. This allows the receiver to be isolated from the voltage levels of the trolley line.

The electric signal can be provided to the trolley line utilizing a transmitter 20. In one example, as illustrated also in Figure 1, the transmitter is part of the arrangement 200 and thereby integrally coupled to the trolley line 110, whereas in another example, as illustrated also in Figure 3, it is part of the work machine 200, and thereby separate from the trolley line 110. Naturally, it is also possible to include transmitters 20 in both the arrangement 100 and the work machine 200. This may also allow the work machine to be used with trolley lines both comprising and not comprising the transmitter. When the power-feeding arrangement 100 comprises the transmitter, the arrangement may comprise a transformer for galvanically isolating the transmitter from the trolley line. Similarly, when the work machine 200 comprises the transmitter, the work machine may comprise a transformer for galvanically isolating the transmitter from the trolley line. In both cases, this allows the transmitter to be isolated from the voltage levels of the trolley line. When the transmitter is part of the work machine, it may be separate or integrated with the receiver and in the latter case the two may form together a transmitter-receiver.

Regardless of its positioning, the transmitter 20 may be configured for causing the electric signal to be provided to the trolley line at a constant or at a changing amplitude. Here, the change corresponds to a temporal change, which may be observed even when the work machine is stationary with respect to the trolley line. The amplitude of the electric signal received from the trolley line by the work machine 200 may be used to determine the position of the work machine or its distance with respect to the means 120, 130, for example with respect to the transmitter 20 or with respect to one or more trap filters 120.

The arrangement 100 comprises the trolley line 110 and means 120, 130 for controlling transmission of an electric signal along the trolley line. The means can be used for signaling that the work machine is near an end of the trolley line so that the work machine can be decoupled from the trolley line before an end 112, 116 of the trolley line.

The means comprise one or more trap filters 120. These may be integrally coupled to the trolley line 110 for limiting the transmission of the electric signal along the trolley line. A trap filter may be positioned at an end 112, 116 of the trolley line, in which case the electric signal may indicate that the work machine 200 is near the trap filter and thereby near the end of the trolley line. The indication may be obtained, for example, from the amplitude of the electric signal, for example by the amplitude exceeding a threshold value. Alternatively or additionally, the indication may be obtained from the frequency of the electric signal, for example by determining the frequency corresponding to a resonance frequency, e.g. corresponding to a maximum and/or minimum current. The resonance frequency may be determined with respect to the trolley line and it may be spatially changing as the position of the work machine changes along the trolley line. The resonance frequency may be determined for series resonance, which may correspond to a maximal current, and/or for parallel resonance, which may correspond to a minimal current. A change in the resonance frequency may be used to indicate distance from the work machine to a transmitter and/or a trap filter.

The disclosed solution allows the indication to be straightforwardly calculated upon receiving the electric signal but, alternatively or additionally, configuration may also be performed utilizing one or more test measurements. A trap filter may also be positioned at a distance from the trolley line for defining a near-end region before the end of the trolley line. In this case, the electric signal may indicate that the work machine is within the near-end region and thereby near the end of the trolley line. The distance should be long enough so that the work machine can be decoupled from the trolley line after it receives the electric signal but before it has arrived at the end of the trolley line. The minimum distance required naturally depends on the circumstances such as the maximum speed of the work machine approaching the end of the trolley line but as an example the distance may be at least 5-10 meters. In many applications, a distance of 25-100 meters, for example 50 meters may be used. The present invention allows the distance to be adjusted based on the application by positioning the trap filter and thereby maximizing the use of the trolley line.

According to a first example, as illustrated also in Figure 1, the means comprise the transmitter 20, which is configured to cause the electric signal to be provided to the trolley line 110 from the arrangement 100. In addition, the means comprise a trap filter 120 positioned along the trolley line to define the near-end region as described above. The transmitter 20 is positioned to cause the electric signal to be provided into the near-end region of the trolley line, i.e. between the trap filter and the end of the trolley line. The trap filter may substantially prevent the electric signal from escaping the near-end region. This way, the work machine 200 may receive the electric signal only when it moves to the near-end region so that the receipt of the electric signal may be used as an indication that the work machine is near an end of the trolley line, while not necessary requiring any further information. The near-end region may be formed at each of the two opposite ends of the trolley line, in which cases two separate transmitters may be used, one for each end. These transmitters may be tuned for the same transmitting frequency or for different transmitting frequencies. As mentioned above, it should be understood that some amount of signal may leak beyond the trap filter so that any prevention mentioned here may be partial as long as it is sufficient for the purposes of providing the indication that the end of the trolley line is near.

According to a second example, as illustrated also in Figure 3, the work machine 200 comprises the transmitter 20, which is configured to cause the electric signal to be provided to the trolley line 110 from the work machine 200. In this example, the work machine 200 may thereby, by itself, cause the electric signal to be transmitted to the trolley line and receive it from the trolley line for determining whether the work machine is near an end 112, 116 of the trolley line. The determination may be performed based on properties of the electric signal, for example its amplitude and/or frequency, after it has been received. In the case of frequency, the determination may be performed, for example, based on the frequency being a resonance frequency, or the frequency minimizing or maximizing the amplitude. The properties may also be used to determine, for example, the position of the work machine along the trolley line. The properties may be affected by the means for controlling transmission of the electric signal along the trolley line. In particular, the means here may comprise or consist of one or more trap filters 120. Here, a trap filter may be positioned at an end of the trolley line as described above. Correspondingly, one trap filter may be positioned at each of the opposite ends 112, 116 of the trolley line for controlling the transmission of the electric signal, caused to be transmitted from the work machine. This way, the means may comprise two trap filters and no further equipment is necessarily required.

In both cases, the controller of the work machine 200 is configured to utilize an indication from the electric signal that the work machine is near and end 112, 116 of the trolley line 100 for causing the work machine to be decoupled from the trolley line. According to the invention, the controller is configured to control the decoupling of the work machine from the trolley line based on the presence and/or the amplitude of the electric signal. The decoupling may be initiated, for example, when the electric signal is detected or when the amplitude of the electric signal exceeds a threshold amplitude. Any frequency information of the electric signal may also be used.

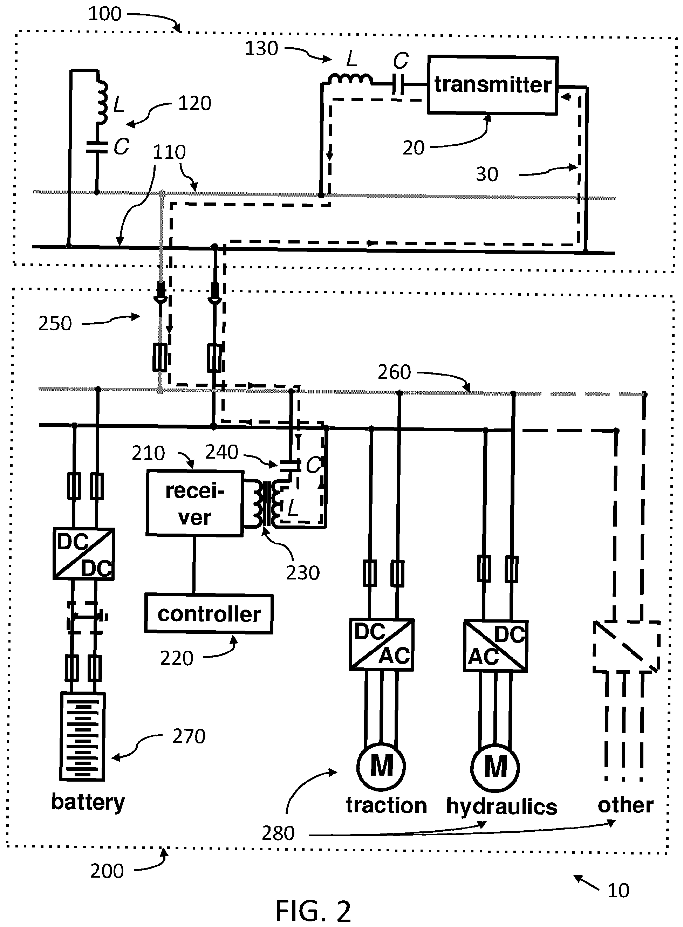

Figure 2 shows an example of a system 10 comprising a work machine 200 and an arrangement 100. In this example, the arrangement comprises the transmitter 20 may in this respect correspond to that of Figure 1. The example is illustrated in terms of a dc power line of the trolley line 110 but the power line may also be an ac power line. For the work machine, only an example of an electric system is illustrated in the figure.

The arrangement 100 here comprises the trolley line 110 and the transmitter 20. As stated above, the arrangement may also comprise a transformer for galvanically isolating the transmitter from the trolley line. In the illustrated example, the transmitter is coupled to the trolley line through an LC circuit 130, which may comprise an inductance and a capacitance in series connection with the transformer. Additionally, the arrangement may comprise one or more trap filters 120. As illustrated, any trap filter of any arrangement referred in this disclosure may comprise or consist of an LC circuit for capturing the electric signal. The LC circuit may comprise or consist of an inductance and a capacitance in series connection, which may be coupled to the trolley line for electrically connecting two separate wires of its power line. The trap filter may thereby have a series resonance frequency for capturing the electric signal. Here, the one or more trap filters 120 may be positioned at a distance from the end of the trolley line for forming the near-end region as described above. The one or more trap filters may comprise two or more trap filters having different resonance frequencies.

The work machine 200 comprises the receiver 210, the controller 220 and the electric power connection 250 as described above. These form a part of the electric system of the work machine, which electric system may additionally comprise the power source, such as a battery 270. The electric system may further comprise one or more subsystems 280 such as a subsystem for traction, a subsystem for hydraulics and so on. The work machine may comprise a bus 260 for transmitting power within the work machine. Correspondingly, the power source and the electric power connection may be electrically coupled to the bus. When an energy storage such as a battery is electrically coupled to the electric power connection, for example through the bus, it can be chargeable through the electric power connection when the work machine is coupled to the trolley line 110. The bus may be a dc bus.

The work machine 200 may comprise a trap filter 240 to which the receiver 210 is coupled for receiving the electric signal. The trap filter may be coupled to the bus 260 for receiving the electric signal. As illustrated, any trap filter of any work machine referred in this disclosure may comprise or consist of an LC circuit for capturing the electric signal. The LC circuit may comprise or consist of an inductance and a capacitance in series connection, which may be electrically coupled to electric power connection 250, or the bus 260, for electrically connecting two separate wires thereof. This allows a signal path 30 to be created, when the work machine is coupled to the trolley line 110, for facilitating the transmission of the electric signal from the transmitter 20 to the receiver 210. The trap filter may thereby have a series resonance frequency for capturing the electric signal. As illustrated, the work machine may additionally comprise a transformer 230 for galvanically isolating the receiver from the electric power connection and thereby from the voltage levels of the power connection and the trolley line. The transformer may be integrated with the trap filter 240 so that the inductance of the trap filter provides a primary inductance for the transformer, whereas the transformer comprises a secondary inductance for the transformer coupled to this primary inductance for providing the transformer functionality.

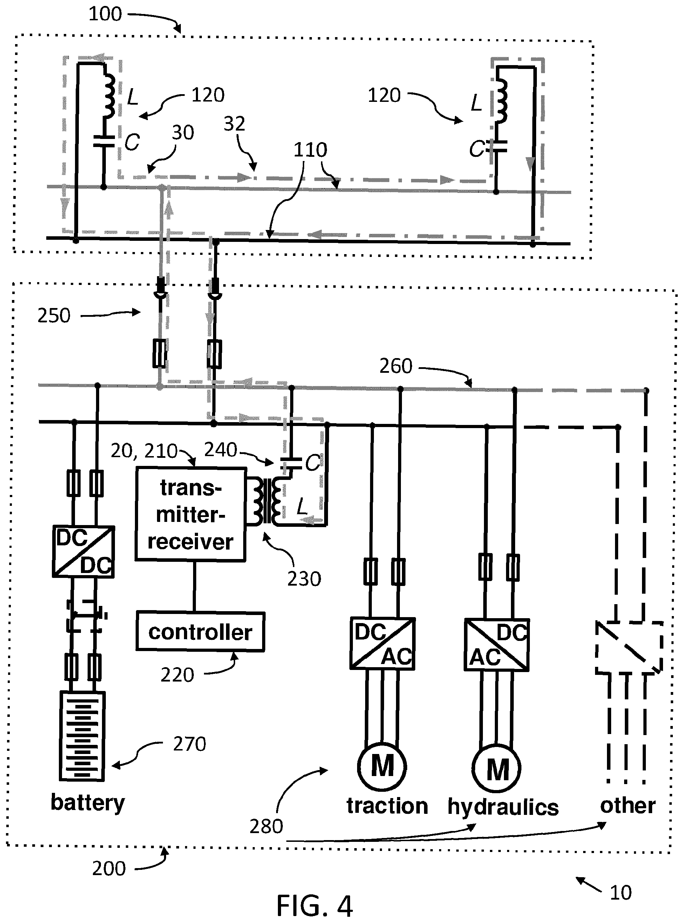

Figure 4 shows an example of a system 10 comprising a work machine 200 and an arrangement 100. In this example, the work machine comprises the transmitter 20 and the system here may in this respect correspond to that of Figure 3. The example is illustrated in terms of a dc power line of the trolley line 110 but the power line may also be an ac power line. For the work machine, only an example of an electric system is illustrated in the figure.

In this example, the work machine 200 comprises the transmitter 20 and not the arrangement 100. Correspondingly, the work machine comprises both the transmitter and the receiver 210, which are illustrated as an integrated transmitter-receiver. Any of the other parts of the work machine mentioned above in conjunction with the example of figure 2 may be included also herein as described above. For example, the trap filter 240 and/or the transformer 230 may be coupled to the transmitted in the same manner as for the receiver. The same trap filter 240 and/or transformer 230 may serve both the transmitter and the receiver.

The arrangement 100 here does not necessarily comprise the transmitter 20. Instead, the arrangement may comprise the trap filter 120 at an end of the trolley line 110, as described above. This allows a signal path 30 to be created, when the work machine is coupled to the trolley line 110, for facilitating the transmission of the electric signal from the transmitter 20 to the receiver 210 through the trap filter 120 of the arrangement. As the signal travels through this signal path, there is always some degree of dissipation, which may even be varied depending on the properties of the signal such as its frequency. The amplitude of the electric signal may become larger and/or the frequency corresponding the maximal amplitude may change when the work machine approaches the trap filter, thereby allowing the amplitude and/or the frequency of the signal to be used for determining that that the work machine is near the trap filter and thereby the end of the trolley line. The means for controlling the transmission of the electric signal along the trolley line may then comprise or consist of, for example, two trap filters at opposite ends of the trolley line. For simplicity, the two trap filters, in this case, may be identical to each other. In particular, they may have the same capacitance and/or inductance. The arrangement may be substantially symmetric so that for all distances between the first trap filter and the work machine, the corresponding amplitude of the electric signal is substantially the same as the amplitude of the electric signal for all equivalent distances between the second trap filter and the work machine. In any case, separate signal paths 30, 32 may be formed for the two trap filters. This allows the magnitude of the electric signal with respect to the position of the work machine along the trolley line to be representable by a convex function with maxima at the opposite ends of the trolley line.

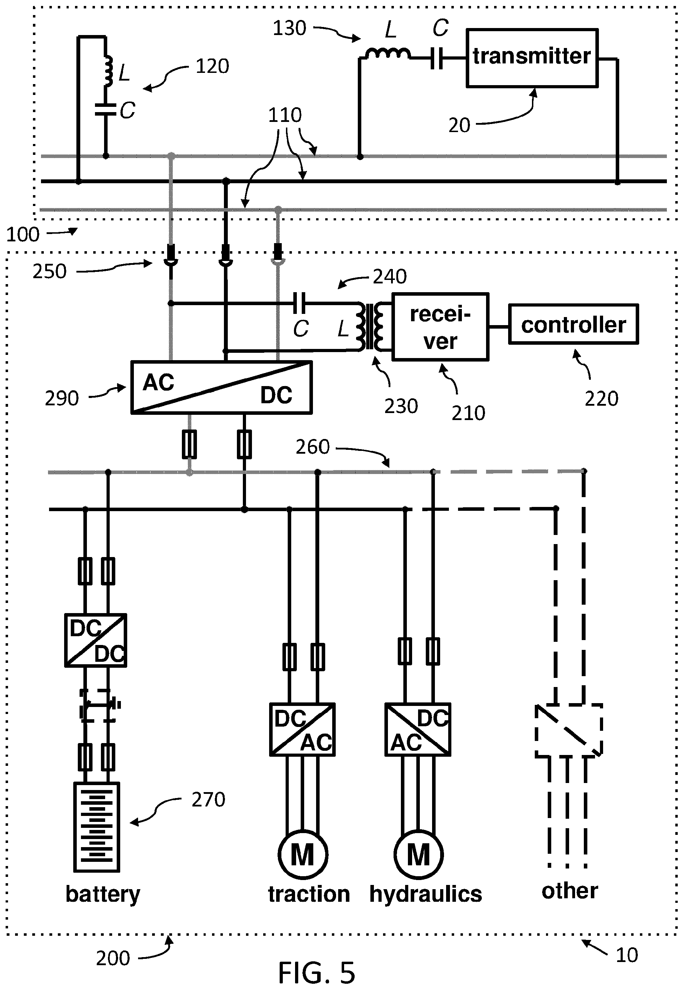

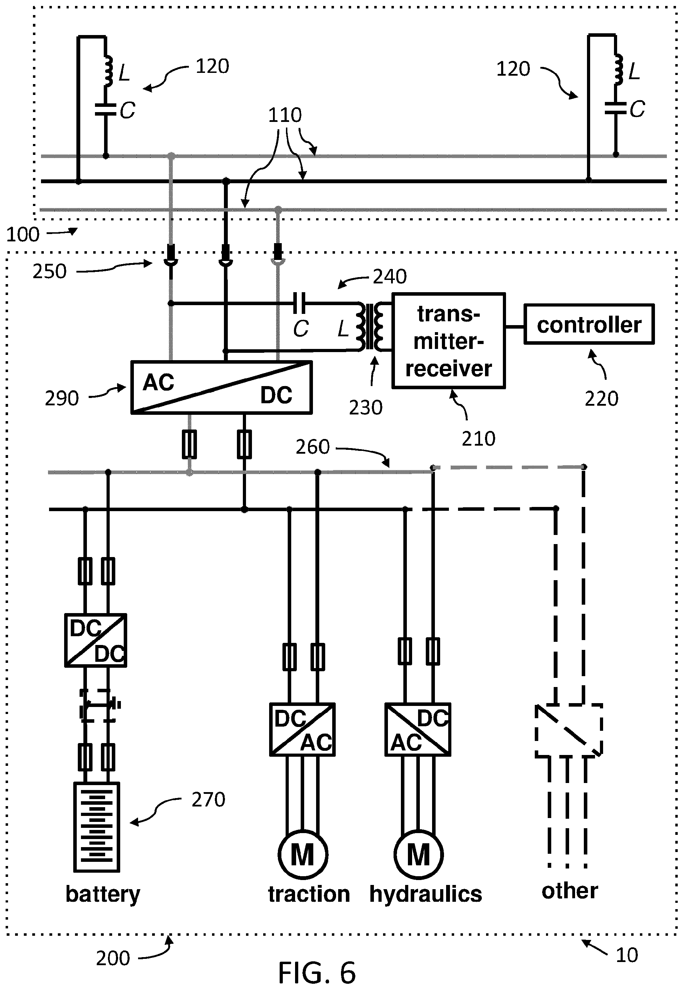

Figures 5 and 6 show an example of a system 10 comprising a work machine 200 and an arrangement 100. These examples are illustrated in terms of an ac power line of the trolley line 110.

In the first example, as illustrated in Figure 5, the arrangement 100 comprises the transmitter 20. Correspondingly, all the alternatives disclosed in conjunction of figure 2 are applicable also here. As an exception, the work machine 200 here may comprise a rectifier 290 coupled to the electric power connection 250 for converting the alternating current from the trolley line 110 to direct current. The rectifier may then be coupled to the bus 260 for providing electric power to the bus. The rectifier allows a dc electric system, including a dc bus, to be used for the work machine. As illustrated, the receiver 210 may here be directly coupled to the electric power connection for receiving ac current from the trolley line. Correspondingly, the trap filter 240 and/or the transformer 230 of the work machine may also be coupled to the electric power connection for receiving ac current from the trolley line. The receiver may thus be situated prior to any rectifier for receiving ac current from the trolley line.

In the second example, as illustrated in Figure 6, the work machine 200 comprises the transmitter 20. Correspondingly, all the alternatives disclosed in conjunction of figure 4 are applicable also here. As an exception, the work machine 200 here may comprise a rectifier 290 coupled to the electric power connection 250 for converting the alternating current from the trolley line 110 to direct current. The rectifier may then be coupled to the bus 260 for providing electric power to the bus. The rectifier allows a dc electric system, including a dc bus, to be used for the work machine. As illustrated, the receiver 210 may here be directly coupled to the electric power connection for receiving ac current from the trolley line. Correspondingly, the trap filter 240 and/or the transformer 230 of the work machine may also be coupled to the electric power connection for receiving ac current from the trolley line. Similarly, the transmitter 20 may be directly coupled to the electric power connection for causing the electric signal to be provided to the trolley line, already directly into the ac wiring of the electric power connection. Naturally, also here the transmitter and the receiver may be integrated as a transmitter-receiver, as illustrated. The transmitter and/or receiver may thus be situated prior to any rectifier for causing the electric signal to be transmitted to the trolley line and/or receiving ac current from the trolley line.

The controller as described above may be implemented in software, hardware, application logic or a combination of software, hardware and application logic. The application logic, software or instruction set may be maintained on any one of various conventional computer-readable media. A "computer-readable medium" may be any media or means that can contain, store, communicate, propagate or transport the instructions for use by or in connection with an instruction execution system, apparatus, or device, such as a computer. A computer-readable medium may comprise a computer-readable storage medium that may be any media or means that can contain or store the instructions for use by or in connection with an instruction execution system, apparatus, or device, such as a computer. The examples can store information relating to various processes described herein. This information can be stored in one or more memories, such as a hard disk, optical disk, magneto-optical disk, RAM, and the like. One or more databases can store the information used to implement the embodiments. The databases can be organized using data structures (e.g., records, tables, arrays, fields, graphs, trees, lists, and the like) included in one or more memories or storage devices listed herein. The databases may be located on one or more devices comprising local and/or remote devices such as servers. The processes described with respect to the embodiments can include appropriate data structures for storing data collected and/or generated by the processes of the devices and subsystems of the embodiments in one or more databases.

All or a portion of the embodiments can be implemented using one or more general purpose processors, microprocessors, digital signal processors, micro-controllers, and the like, programmed according to the teachings of the embodiments, as will be appreciated by those skilled in the computer and/or software art (s). Appropriate software can be readily prepared by programmers of ordinary skill based on the teachings of the embodiments, as will be appreciated by those skilled in the software art. In addition, the embodiments can be implemented by the preparation of application-specific integrated circuits or by interconnecting an appropriate network of conventional component circuits, as will be appreciated by those skilled in the electrical art(s). Thus, the embodiments are not limited to any specific combination of hardware and/or software.

The different functions discussed herein may be performed in a different order and/or concurrently with each other.

Any range or device value given herein may be extended or altered without losing the effect sought, unless indicated otherwise. Also any example may be combined with another example unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The term 'comprising' is used herein to mean including the method, blocks or elements identified, but that such blocks or elements do not comprise an exclusive list and a method or apparatus may contain additional blocks or elements.

Numerical descriptors such as 'first', 'second', and the like are used in this text simply as a way of differentiating between parts that otherwise have similar names. The numerical descriptors are not to be construed as indicating any particular order, such as an order of preference, manufacture, or occurrence in any particular structure.

## Claims

1. A power-feeding arrangement (100) for a trolley-assisted work machine (200), comprising a trolley line (110) for providing electric power to the work machine comprising means for controlling the transmission of an electric signal along the trolley line for signaling that the work machine is near an end (112,116) of the trolley line so that the work machine can be detached from the trolley line before the end of the trolley line, **characterized in that** the means comprise one or more trap filters (120) at the opposite ends of the trolley line coupled to the trolley line for limiting the transmission of the electric signal along the trolley line, whereby the amplitude and/or frequency of the electric signal is used to indicate that the work machine is near the end of the trolley line.

2. The arrangement according to claim 1, wherein the means comprise a transmitter (20) configured to cause the electric signal to be provided to the trolley line.

3. A trolley-assisted work machine (200) comprising an electric power connection for receiving electric power from a trolley line according to any one of claims 1,2; the trolley-assisted work machine comprising
a receiver (210) coupled to the electric power connection for receiving an electric signal from the trolley line for signaling that the work machine is near an end of the trolley line; and
a controller (220) coupled to the receiver for controlling the detachment of the work machine from the trolley line before the end of the trolley line,
**characterized in that**
the controller is configured to control the detachment of the work machine from the trolley line based on the amplitude and/or the frequency of the electric signal.

4. The work machine according to claim 3, comprising
a transmitter (20) for causing the electric signal tc be provided to the trolley line.

5. The work machine according to claim 3 or 4 wherein the receiver comprises a trap filter (240) for receiving the electric signal.

6. The work machine according to any of claims 3-5, comprising a transformer (230) for galvanically isolating the receiver from the electric power connection.

7. A system comprising the power-feeding arrangement according to any of claims 1 or 2 and the trolley-assisted work machine according to any of claims 3-6.

8. The arrangement according to any of claims 1-2, the trolley-assisted work machine according to any of claims 3-6 or the system according to claim 7, wherein the trolley line is a direct current power line.

9. The arrangement according to any of claims 1-2, the trolley-assisted work machine according to any of claims 3-6 or the system according to claim 7, wherein the trolley-assisted work machine is a mining vehicle or an underground mining vehicle.

10. The arrangement according to any of claims 1-2, the trolley-assisted work machine according to any of claims 3-6 or the system according to claim 7, wherein the electric signal has a temporally changing frequency and/or a temporally changing amplitude.

11. The arrangement according to claim 2, the trolley-assisted work machine according claim 4, or the system according to claim 7, comprising a transformer for galvanically isolating the transmitter from the trolley line.

## Patentansprüche

1. Stromeinspeisungsanordnung (100) für eine wagenunterstützte Arbeitsmaschine (200), umfassend eine Wagenoberleitung (110) zum Bereitstellen von elektrischem Strom für die Arbeitsmaschine, umfassend Mittel zum Steuern der Übertragung eines elektrischen Signals entlang der Wagenoberleitung, zum Signalisieren, dass sich die Arbeitsmaschine in der Nähe eines Endes (112, 116) der Wagenoberleitung befindet, sodass die Arbeitsmaschine vor dem Ende der Wagenoberleitung von der Wagenoberleitung gelöst werden kann, **dadurch gekennzeichnet, dass** die Mittel an den gegenüberliegenden Enden der Wagenoberleitung einen oder mehrere Sperrfilter (120) umfassen, die zum Begrenzen der Übertragung des elektrischen Signals entlang der Wagenoberleitung mit der Wagenoberleitung gekoppelt sind, wodurch die Amplitude und/oder Frequenz des elektrischen Signals verwendet wird, um anzugeben, dass sich die Arbeitsmaschine in der Nähe des Endes der Wagenoberleitung befindet.

2. Anordnung nach Anspruch 1, wobei die Mittel einen Sender (20) umfassen, der konfiguriert ist, um das elektrische Signal zu veranlassen, der Wagenoberleitung bereitgestellt zu werden.

3. Wagenunterstützte Arbeitsmaschine (200), umfassend eine elektrische Stromverbindung zum Empfangen von elektrischem Strom von einer Wagenoberleitung nach einem der Ansprüche 1, 2; wobei die wagenunterstützte Arbeitsmaschine umfasst
einen Empfänger (210), der zum Empfangen eines elektrischen Signals von der Wagenoberleitung zum Signalisieren mit der elektrischen Stromverbindung gekoppelt ist, dass sich die Arbeitsmaschine in der Nähe eines Endes der Wagenoberleitung befindet; und
eine Steuereinheit (220), die zum Steuern des Lösens der Arbeitsmaschine von der Wagenoberleitung vor dem Ende der Wagenoberleitung mit dem Empfänger gekoppelt ist,
**dadurch gekennzeichnet, dass**
die Steuereinheit konfiguriert ist, um das Lösen der Arbeitsmaschine von der Wagenoberleitung basierend auf der Amplitude und/oder Frequenz des elektrischen Signals zu steuern.

4. Arbeitsmaschine nach Anspruch 3, umfassend einen Sender (20) zum Veranlassen, dass das elektrische Signal der Wagenoberleitung bereitgestellt wird.

5. Arbeitsmaschine nach Anspruch 3 oder 4, wobei der Empfänger einen Sperrfilter (240) zum Empfangen des elektrischen Signals umfasst.

6. Arbeitsmaschine nach einem der Ansprüche 3-5, umfassend einen Transformator (230) zum galvanischen Isolieren des Empfängers vom elektrischen Strom.

7. System, umfassend die Stromeinspeisungsanordnung nach einem der Ansprüche 1 oder 2 und die wagenunterstützte Arbeitsmaschine nach einem der Ansprüche 3-6.

8. Anordnung nach einem der Ansprüche 1-2, wagenunterstützte Arbeitsmaschine nach einem der Ansprüche 3-6 oder System nach Anspruch 7, wobei die Wagenoberleitung eine Gleichstromleitung ist.

9. Anordnung nach einem der Ansprüche 1-2, wagenunterstützte Arbeitsmaschine nach einem der Ansprüche 3-6 oder System nach Anspruch 7, wobei die wagenunterstützte Arbeitsmaschine ein Bergbaufahrzeug oder ein Untertage-Bergbaufahrzeug ist.

10. Anordnung nach einem der Ansprüche 1-2, wagenunterstützte Arbeitsmaschine nach einem der Ansprüche 3-6 oder System nach Anspruch 7, wobei das elektrische Signal eine zeitlich veränderliche Frequenz und/oder eine sich zeitlich verändernde Amplitude aufweist.

11. Anordnung nach Anspruch 2, wagenunterstützte Arbeitsmaschine nach Anspruch 4 oder System nach Anspruch 7, umfassend einen Transformator zum galvanischen Isolieren des Senders von der Wagenoberleitung.

## Revendications

1. Agencement d'alimentation en énergie (100) pour une machine de travail assistée par chariot (200), comprenant une ligne de chariot (110) pour fournir de l'énergie électrique à la machine de travail, comprenant des moyens de commande de la transmission d'un signal électrique le long de la ligne de chariot pour signaler que la machine de travail est proche d'une extrémité (112, 116) de la ligne de chariot de sorte que la machine de travail puisse être détachée de la ligne de chariot avant l'extrémité de la ligne de chariot, **caractérisé en ce que** les moyens comprennent un ou plusieurs filtres bouchons (120) aux extrémités opposées de la ligne de chariot et couplés à la ligne de chariot pour limiter la transmission du signal électrique le long de la ligne de chariot, selon lequel l'amplitude et/ou la fréquence du signal électrique sont utilisées pour indiquer que la machine de travail est proche de l'extrémité de la ligne de chariot.

2. Agencement selon la revendication 1, dans lequel les moyens comprennent un émetteur (20) configuré pour amener le signal électrique à être fourni à la ligne de chariot.

3. Machine de travail assistée par chariot (200) comprenant une connexion d'alimentation en énergie pour recevoir de l'énergie électrique d'une ligne de chariot selon l'une quelconque des revendications 1 et 2 ; la machine de travail assistée par chariot comprenant
un récepteur (210) couplé à la connexion d'alimentation en énergie pour recevoir un signal électrique depuis la ligne de chariot signalant que la machine de travail est proche d'une extrémité de la ligne de chariot ; et
un dispositif de commande (220) couplé au récepteur pour commander le détachement de la machine de travail de la ligne de chariot avant l'extrémité de la ligne de chariot,
**caractérisée en ce que**
le dispositif de commande est configuré pour commander le détachement de la machine de travail de la ligne de chariot sur la base de l'amplitude et/ou de la fréquence du signal électrique.

4. Machine de travail selon la revendication 3, comprenant un émetteur (20) pour amener le signal électrique à être fourni à la ligne de chariot.

5. Machine de travail selon la revendication 3 ou 4, dans laquelle le récepteur comprend un filtre bouchon (240) pour recevoir le signal électrique.

6. Machine de travail selon l'une quelconque des revendications 3-5, comprenant un transformateur (230) pour isoler galvaniquement le récepteur de la connexion d'alimentation en énergie.

7. Système comprenant l'agencement d'alimentation en énergie selon l'une quelconque des revendications 1 ou 2 et la machine de travail assistée par chariot selon l'une quelconque des revendications 3-6.

8. Agencement selon l'une quelconque des revendications 1-2, machine de travail assistée par chariot selon l'une quelconque des revendications 3-6 ou système selon la revendication 7, dans lequel la ligne de chariot est une ligne électrique à courant continu.

9. Agencement selon l'une quelconque des revendications 1-2, machine de travail assistée par chariot selon l'une quelconque des revendications 3-6 ou système selon la revendication 7, dans lequel la machine de travail assistée par chariot est un véhicule minier ou un véhicule minier souterrain.

10. Agencement selon l'une quelconque des revendications 1-2, machine de travail assistée par chariot selon l'une quelconque des revendications 3-6 ou système selon la revendication 7, dans lequel le signal électrique présente une fréquence variable dans le temps et/ou une amplitude variable dans le temps.

11. Agencement selon la revendication 2, machine de travail assistée par chariot selon la revendication 4 ou système selon la revendication 7, comprenant un transformateur pour isoler galvaniquement l'émetteur de la ligne de chariot.
